# EUROPÄISCHE PATENTSCHRIFT

(11) **EP 1 656 783 B1**
(45) Veröffentlichungstag und Bekanntmachung des Hinweises auf die Patenterteilung: **23.01.2008**
(21) Anmeldenummer: 04741660.7
(22) Anmeldetag: 27.05.2004
(51) Int. Cl.: H04L 29/08

(54) **VERFAHREN ZUR BERTRAGUNG VON WAP-PUSH-NACHRICHTEN**
METHOD FOR TRANSMITTING WAP PUSH MESSAGES
PROCEDE POUR TRANSMETTRE DES MESSAGES WAP A DIFFUSION AUTOMATIQUE

(30) Priorität: 22.08.2003 DE 10338708
(43) Veröffentlichungstag der Anmeldung: 17.05.2006
(73) Patentinhaber: Nokia Siemens Networks GmbH & Co. KG, 81541 München (DE)
(72) Erfinder: BIOT, Olivier, B-2650 Edegem (BE)
(86) Internationale Anmeldenummer: PCT/EP2004/050938
(87) Internationale Veröffentlichungsnummer: WO 2005/022866

(56) Entgegenhaltungen:
- WO-A-00/78005
- WO-A-01/89236
- US-A1- 2002 155 848
- MARTIN HEBERT: "WAR Forum Opens Up To 3rd Party Developers" WAP FORUM, 29. Mai 1999 (1999-05-29), XP002148058

## Beschreibung

Die Erfindung betrifft ein Verfahren zur Übertragung von Daten aus einem Datennetz an ein Telekommunikationsendgerät, wobei die Daten in dem Datennetz als mindestens eine WAP-Push-Nachricht vorliegen.

Weiterhin betrifft die Erfindung Einrichtungen zur Übertragung von Informationen bei einer Kommunikation zwischen einem Telekommunikationsendgerät und einem Datennetz und ein Telekommunikationsendgerät.

Die Verbindung der Datenwelt, z.B. in Form des Internet, mit der Welt der Telekommunikation, speziell der Mobilfunknetze, gewinnt in der heutigen Zeit immer mehr an Bedeutung. Zur Nutzung der Informationen und Dienste des Internet, wie z.B. E-Mail, im Bereich der Mobilfunktechnik dient der sogenannte WAP (Wireless Application Protocol)-Standard. Dieser Standard schafft mit seiner mehrschichtigen Protokollarchitektur eine einheitliche Grundlage zur Nutzung drahtloser IP (Internet Protocol)-Dienste, und zwar unabhängig von der eigentlichen Funkschnittstelle, wobei als technische Vorraussetzung für die Internetkommunikation lediglich ein Zugang zu einem Mobilfunknetz, ein Mobiltelefon mit einem mehrzeiligen Textdisplay und ein Mikro-Browser genügen.

Mit WAP ist es möglich, Inhalte, die im Internet zur Verfügung gestellt werden, abzurufen und auf das Mobiltelefon zu laden, wobei dieser Vorgang, bei dem Daten nur auf Abruf gesendet werden, allgemein kurz mit "Pull" bezeichnet wird. Will man nun Daten aus dem Internet heraus an ein Mobiltelefon schicken, seien es Nachrichten, die ein Informationsdienst zur Verfügung stellt, Werbung, die ein Anbieter aus dem Internet an seine Kunden verschickt, oder im einfachsten Fall eine E-Mail oder SMS, so spricht man bei diesem Vorgang, bei dem keine Daten von dem Mobiltelefon angefordert, sondern "spontan" gesendet werden, von "WAP-Push".

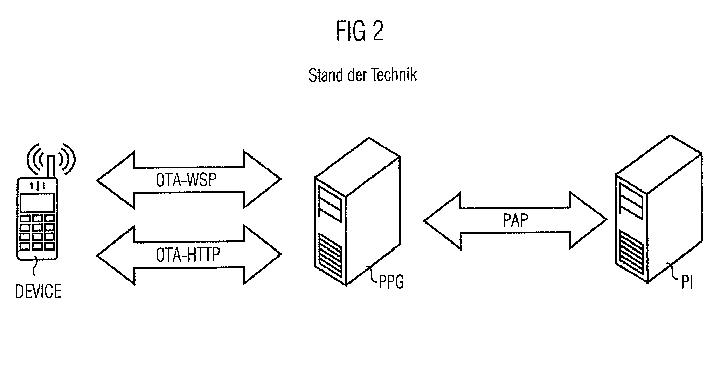

Bei WAP-Push werden - wie in Figur 2 dargestellt - die Daten internetseitig von einem Push Initiator PI mit dem Push Access Protocol PAP an die Schnittstelle zwischen Internet und Mobilfunknetz, das Push Proxy Gateway PPG, übertragen. Von dort werden die Daten zum Mobiltelefon DEVICE eines WAP-Kunden im Push-over-the-Air (OTA)-Protocol gesendet. Dieses Push-over-the-Air-Protocol basiert auf der Struktur des Wireless Session Protocol (WSP), des Kommunikationsprotokolls der Sitzungsschicht der WAP Protokollarchitektur, d.h. OTA-WSP, oder auf dem HTTP (Hypertext Transfer Protocol), d.h. OTA-HTTP.

Das Dokument WO 00/78005 A2 beschreibt ein Verfahren zur Übertragung von Push-Nachrichten, bei welchem ein Teilnehmer bestimmte Inhalte anfordert und daraufhin anstelle der angeforderten Inhalte die Push-Nachricht empfängt.

Das Dokument WO 01/89236 A2 beschreibt eine Kommunikation über den Standard WAP. Es liegt das Problem zugrunde, dass für WAP keine Push-Technologie existiert. Es wird daher eine Lösung vorgestellt, welche keine WAP-Push Technologie einsetzt.

Während herkömmliche WAP Standards 1.x auf UDP (User Datagram Protocol) basieren, lehnen sich die neueren WAP Standards 2.x an existierende Internet Protokolle wie TCP (Transmission Control Protocol), TLS (Transport Layer Security) und HTTP an.

Eine Reihe von mobilen Telekommunikationsendgeräten, wie z.B. bestimmte Gruppen von Mobilstationen oder Handheld Computer unterstützen das WAP-Push-Verfahren nicht. WAP-Push-Nachrichten, welche zu diesen Endgeräten versendet werden, müssen daher verworfen werden. Das gleiche Problem tritt bei Telekommunikationsendgeräten auf, welche nicht geeignet sind, eine bestimmte Art von WAP-Push-Nachrichten, wie z.B. MMS-Nachrichten, zu empfangen, wenn eine ebensolche WAP-Push-Nachricht für ein derartiges Telekommunikationsendgerät vorliegt.

Der Erfindung liegt die Aufgabe zugrunde, ein Verfahren der eingangs genannten Art aufzuzeigen, welches die Übertragung von Daten aus einem Datennetz an ein Telekommunikationsendgerät unabhängig von einer bestehenden WAP-Push Eignung des Telekommunikationsendgerätes ermöglicht. Weiterhin soll ein ge-eignetes Telekommunikationsendgerät und Einrichtungen zur Übertragung von Informationen bei einer Kommunikation zwischen einem Telekommunikationsendgerät und einem Datennetz zur Durchführung des Verfahrens aufgezeigt werden.

Diese Aufgabe wird hinsichtlich des Verfahrens durch ein Verfahren mit den Merkmalen des Anspruchs 1 gelöst.

Vorteilhafte Ausgestaltungen und Weiterbildungen sind Gegenstand von Unteransprüchen.

In dem Verfahren zur Übertragung von Daten aus einem Datennetz an ein Telekommunikationsendgerät liegen die Daten in dem Datennetz als mindestens eine WAP-Push-Nachricht vor. Erfindungsgemäß werden dem Telekommunikationsendgerät auf eine erste Anforderungsnachricht des Telekommunikationsendgerätes hin von dem Datennetz Informationen über die mindestens eine WAP-Push-Nachricht übermittelt und das Telekommunikationsendgerät fordert die Daten unter Bezugnahme auf die zuvor übermittelten Informationen über die mindestens eine WAP-Push-Nachricht an.

Vorteilhafterweise findet vor der Übermittlung der Informationen über die mindestens eine WAP-Push-Nachricht eine Überprüfung statt, ob innerhalb des Datennetzes WAP-Push-Nachrichten für das betreffende Telekommunikationsendgerät vorliegen. Bei Vorliegen einer WAP-Push-Nachricht für das Telekommunikationsendgerät wird diese dem Telekommunikationsendgerät jedoch nicht unaufgefordert zugestellt, wie es die WAP-Push Standards beinhalten, vielmehr werden Informationen über die WAP-Push-Nachricht übermittelt.

In Weiterbildung der Erfindung werden die Daten im Anschluss von dem Datennetz an das Telekommunikationsendgerät übermittelt.

Mit Vorzug handelt es sich bei der ersten Anforderungsnachricht des Telekommunikationsendgerätes um eine Anforderung nach Informationen über für das Telekommunikationsendgerät bestimmte WAP-Push-Nachrichten. Demnach erhält das Telekommunikationsendgerät die Informationen über die mindestens eine WAP-Push-Nachricht auf eigene Anforderung nach diesen Informationen. Diese Anforderung kann entweder explizit oder durch eine Informationsnachfrage unter einer Adresse, bei welcher Informationen über WAP-Push-Nachrichten gespeichert sind, erfolgen.

Dem Telekommunikationsendgerät kann vor dem Versenden der ersten Anforderungsnachricht auf eine zweite Anforderungs-nachricht des Telekommunikationsendgerätes nach nicht-WAP-Push-Inhalten aus dem Datennetz hin eine Aufforderung zur Versendung der ersten Anforderungsnachricht übermittelt werden. Beispielsweise kann das Telekommunikationsendgerät mit der zweiten Anforderungsnachricht eine Internetseite anfordern, worauf es als Antwort nicht die angeforderte Internetseite erhält, sondern die Internetadresse einer Seite, welche Informationen über für das Telekommunikationsendgerät adressierte WAP-Push-Nachrichten beinhaltet. Die Angabe dieser Adresse entspricht der Aufforderung an das Telekommunikationsendgerät, die erste Anforderungsnachricht nach Informationen über WAP-Push-Nachrichten zu versenden.

Bei der ersten Anforderungsnachricht des Telekommunikationsendgerätes kann es sich um eine Anforderung nach nicht-WAP-Push-Inhalten handeln. In diesem Fall kann das Telekommunikationsendgerät zum Beispiel als erste Anforderungsnachricht eine Internetseite anfordern, und als Antwort auf diese Anforderung Informationen über für das Telekommunikationsgerät im jeweiligen Datennetz vorliegende WAP-Push-Nachrichten erhalten. So kann eine zweite Anforderungsnachricht mit einer Anfrage des Telekommunikationsendgerätes nach Informationen über WAP-Push-Nachrichten unterbleiben.

In einer Ausgestaltung der Erfindung werden dem Telekommunikationsendgerät zusammen mit den Informationen über die mindestens eine WAP-Push-Nachricht zusätzlich Informationen über weitere WAP-Push-Nachrichten übermittelt. Das Telekommunikationsendgerät kann dann z.B. aus einer Liste von WAP-Push-Nachrichten auswählen, welche WAP-Push-Nachrichten ihm übermittelt werden sollen und die entsprechende Anfrage versenden.

Die Informationen über die mindestens eine WAP-Push-Nachricht können z.B. lediglich das Vorliegen der WAP-Push-Nachricht anzeigen. Jedoch kann es sich bei den Informationen über die mindestens eine WAP-Push-Nachricht auch um Informationen betreffend den Typ der mindestens einen WAP-Push-Nachricht handeln, wie zum Beispiel um die Angabe, dass die WAP-Push-Nachricht eine MMS-Nachricht ist. Weiterhin können die Informationen über die mindestens eine WAP-Push-Nachricht Prioritätsangaben dieser WAP-Push-Nachricht betreffen, so dass das Telekommunikationsendgerät eine Auswahl aus mehreren WAP-Push-Nachrichten unter Beachtung der jeweiligen Prioritätsangaben treffen kann. Bei den Informationen über die mindestens eine WAP-Push-Nachricht kann es sich auch um mindestens einen Empfangszeitpunkt der mindestens einen WAP-Push-Nachricht im Datennetz handeln, so dass das Telekommunikationsendgerät erkennen kann, wie aktuell die jeweilige WAP-Push-Nachricht ist. Schließlich können die Informationen über die mindestens eine WAP-Push-Nachricht mindestens einen Zeitpunkt zur Löschung der WAP-Push-Nachricht betreffen. Ein Zeitpunkt zur Löschung ist dann relevant, wenn die WAP-Push-Nachricht mit einem Zeitfenster zur Zustellung verknüpft ist. Nach dem Ende des Zeitfensters kann dann der Inhalt der WAP-Push-Nachricht im Datennetz gelöscht werden. Beliebige Kombinationen zwischen den oben genannten Informationsarten oder auch die Übermittlung anderer Informationen über die mindestens eine WAP-Push Nachricht an das Telekommunikationsendgerät sind möglich.

Die oben genannte Aufgabe hinsichtlich der Einrichtung wird durch eine Einrichtung mit den Merkmalen des Anspruchs 8 gelöst.

Die Einrichtung zur Übertragung von Informationen bei einer Kommunikation zwischen einem Telekommunikationsendgerät und einem Datennetz umfasst Mittel zum Speichern von mindestens einem Datensatz, welcher im Datennetz in Form von einer WAP-Push-Nachricht für das Telekommunikationsendgerät vorliegt, sowie Mittel zum Übertragen von Informationen über die mindestens eine WAP-Push-Nachricht an das Telekommunikationsendgerät auf eine diesbezügliche ersten Anforderungsnachricht des Telekommunikationsendgerätes hin, sowie Mittel zum Übertragen des mindestens einen Datensatzes an das Telekommunikationsendgerät auf eine diesbezügliche zweite Anforderungs-nachricht des Telekommunikationsendgerätes hin.

Die oben genannte Aufgabe hinsichtlich der Einrichtung wird weiterhin durch eine Einrichtung mit den Merkmalen des Anspruchs 9 gelöst.

Eine vorteilhafte Ausgestaltung ist Gegenstand eines Unteranspruchs.

Die Einrichtung zur Übertragung von Informationen bei einer Kommunikation zwischen einem Telekommunikationsendgerät und einem Datennetz umfasst Mittel zum Empfangen und Auswerten einer ersten Anforderungsnachricht des Telekommunikationsendgerätes, sowie Mittel zum Überprüfen des Vorliegens von mindestens einer WAP-Push-Nachricht für das Telekommunikationsendgerät in dem Datennetz, und Mittel zum Versenden von Informationen über mindestens eine für das Telekommunikationsendgerät in dem Datennetz vorliegenden WAP-Push-Nachricht an das Telekommunikationsendgerät bei einem positiven Ergebnis der vorhergehenden Überprüfung.

Die Überprüfung, ob WAP-Push-Nachrichten für das Telekommunikationsendgerät vorliegen, findet vorzugsweise durch eine Abfrage bei einer geeigneten Einrichtung statt, welche die WAP-Push-Nachrichten für das betreffende Telekommunikationsendgerät speichert.

Vorteilhafterweise weist die Einrichtung weiterhin Mittel zum Versenden einer Antwort an das Telekommunikationsendgerät auf, welche das Telekommunikationsendgerät zur Versendung einer zweiten Anforderungsnachricht nach Informationen über WAP-Push-Nachrichten auffordert, auf die erste Anforderungs-nachricht des Telekommunikationsendgerätes hin.

Die beschriebenen Einrichtungen zur Übertragung von Informationen eignen sich insbesondere zur Durchführung des erfindungsgemäßen Verfahrens. Hierzu können sie weitere geeignete Mittel aufweisen.

Die oben genannte Aufgabe hinsichtlich des Telekommunikationsendgerätes wird durch ein Telekommunikationsendgerät mit den Merkmalen des Anspruchs 11 gelöst.

Eine vorteilhafte Weiterbildung ist Gegenstand eines Unteranspruchs.

Das erfindungsgemäße Telekommunikationsendgerät weist Mittel zum Versenden einer Nachricht zur Anforderung von Informationen über WAP-Push-Nachrichten und/oder von nicht-WAP-Push-Inhalten aus einem Datennetz auf, sowie Mittel zum Empfangen und Auswerten von Informationen über einen oder mehrere Datensätze, welcher oder welche in dem Datennetz in Form von einer oder mehreren WAP-Push-Nachrichten vorliegen, sowie Mittel zum Anfordern von mindestens einem Datensatz unter Bezugnahme auf die zuvor übermittelten Informationen, und Mittel zum Empfangen des angeforderten Datensatzes oder der angeforderten Datensätze.

In einer Ausgestaltung der Erfindung handelt es sich bei dem Telekommunikationsendgerät um ein nicht-WAP-Push-kompatibles Telekommunikationsendgerät. Es kann sich auch um ein eingeschränkt WAP-Push-kompatibles Telekommunikationsendgerät handeln, d.h. ein Telekommunikationsendgerät, welches zwar grundsätzlich WAP-Push-kompatibel ist, aber eine oder mehrere Arten von WAP-Push-Nachrichten nicht unterstützt. Ein Beispiel hierfür ist ein Mobiltelefon, welches zwar keine MMS-Nachrichten empfangen kann, jedoch zum Empfang von anderen WAP-Push-Nachrichten ausgestattet ist.

Das erfindungsgemäße Telekommunikationsendgerät eignet sich insbesondere zur Durchführung des erfindungsgemäßen Verfahrens. Hierzu kann es weitere geeignete Mittel umfassen, wie z.B. Mittel zum Auswählen einer anzufordernden WAP-Push-Nachricht aus Informationen über mehrere für das Telekommunikationsendgerät vorliegende WAP-Push-Nachrichten.

Im folgenden wird die Erfindung anhand eines Ausführungsbeispiels näher erläutert. Dabei zeigen
- Figur 1:: ein Ablaufschema des erfindungsgemäßen Verfahrens,
- Figur 2:: den Stand der Technik zum WAP-Push-Verfahren,
- Figur 3:: eine erste erfindungsgemäße Einrichtung zur Übertragung von Informationen,
- Figur 4:: eine zweite erfindungsgemäße Einrichtung zur Übertragung von Informationen,
- Figur 5:: ein erfindungsgemäßes Telekommunikationsendgerät.

Der Stand der Technik bezüglich des WAP-Push-Verfahrens ist in Figur 2 dargestellt, er wurde oben bereits erläutert. Im folgenden wird davon ausgegangen, dass Telekommunikationsendgeräte, welche sowohl auf WSP als auch auf HTTP basieren kön nen, vorliegen, die nicht in der Lage sind, WAP-Push-Nachrichten nach den_bisherigen WAP-Push-Standards zu empfangen bzw. zu verarbeiten. D.h. es handelt sich hierbei um Telekommunikationsendgeräte, welche WAP nicht unterstützen.

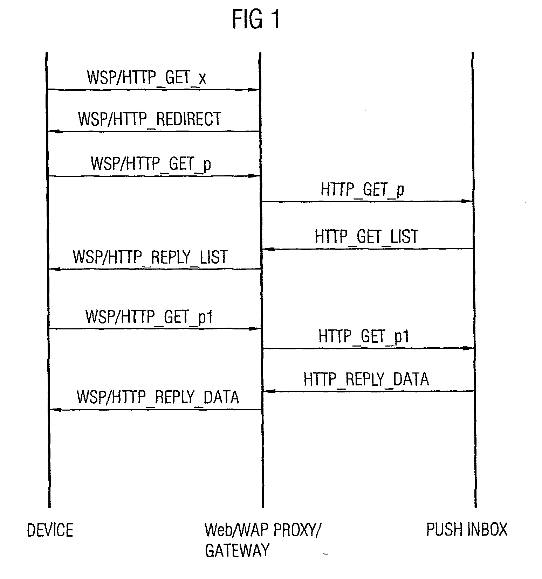

Liegt nun in einem Datennetz, wie z.B. dem Internet, eine WAP-Push-Nachricht für ein solches Telekommunikationsendgerät vor, so kann diese Nachricht dem Telekommunikationsendgerät nicht erfolgreich zugestellt werden. Figur 1 zeigt ein Ablaufdiagramm eines erfindungsgemäßen Verfahrens bei Vorliegen einer oder mehrerer WAP-Push-Nachrichten in einem Datennetz für ein Telekommunikationsendgerät, welches WAP nicht unterstützt. Bei der WAP-Push-Nachricht kann es sich hierbei z.B. um eine Service Indication (SI), d.h. eine URL (Uniform Resource Locator) und einen Text, um einen Service Loading (SL), d.h. um eine URL, um eine MMS oder e-mail handeln. Die Erfindung ist jedoch auf jegliche andere Arten von WAP-Push-Nachrichten anwendbar.

Das Telekommunikationsendgerät DEVICE sendet eine Anfrage WSP/HTTP_GET_x nach Daten aus dem Datennetz an einen Proxy (Verwendung von http zur Kommunikation zwischen dem Telekommunikationsendgerät DEVICE und Proxy) oder an ein GATEWAY (Verwendung von WSP zur Kommunikation zwischen dem Telekommunikationsendgerät DEVICE und Gateway) gegebenenfalls über geeignete weiterleitende Knoten. Bei der Anfrage kann es sich z.B. um eine Anfrage nach einer Internetseite handeln. Das verwendete Protokoll kann abhängig von der Art des Telekommunikationsendgerätes WSP oder HTTP sein. Dem Proxy oder Gateway Web/WAP PROXY/GATEWAY ist bekannt, dass in dem Datennetz eine WAP-Push-Nachricht für das Telekommunikationsendgerät DEVICE vorliegt. Hierzu kann eine Abfrage zur Überprüfung des vorliegens von WAP-Push-Nachrichten für das Telekommunikationsendgerät durch den Proxy oder das Gateway Web/WAP PROXY/GATEWAY erfolgen. Die für das Telekommunikationsendgerät DEVICE vorliegenden WAP-Push-Nachrichten sind in einer Einrichtung PUSH INBOX gespeichert.

Der Proxy oder das Gateway Web/WAP PROXY/GATEWAY sendet daher die Anfrage WSP/HTTP_GET_x nicht weiter, sondern antwortet mit der Nachricht WSP/HTTP_REDIRECT. Mittels dieser Nachricht WSP/HTTP_REDIRECT wird dem Telekommunikationsendgerät DEVICE die URL der Einrichtung PUSH INBOX bekannt gegeben. Die Nachricht WSP/HTTP_REDIRECT erfüllt somit nicht die Anforderung des Telekommunikationsendgerätes DEVICE, sondern fordert das Telekommunikationsendgerät DEVICE dazu auf, eine Anfrage unter Verwendung der URL der PUSH INBOX zu versenden. Da die Einrichtung PUSH INBOX einen Speicher mit den vorliegenden WAP-Push-Nachrichten umfasst, entspricht die Nachricht WSP/HTTP_REDlRECT einer Aufforderung an das Telekommunikationsendgerät, Informationen über WAP-Push-Nachrichten anzufordern. Die Anfrage des Telekommunikationsendgerätes erfolgt mittels der Nachricht WSP/HTTP_GET_p, wobei p der URL der Einrichtung PUSH INBOX entspricht, von dem Telekommunikationsendgerät DEVICE zu dem Proxy oder Gateway Web/WAP PROXY/GATEWAY, welcher eine Nachricht HTTP_GET_p unter Verwendung des http-Protokolls an die Einrichtung PUSH INBOX gegebenenfalls über geeignete weiterleitende Knoten weiterleitet.

Im folgenden wird eine Liste mit Informationen über aktuell vorliegende WAP-Push-Nachrichten mittels der Nachrichten HTTP_REPLY_LIST und WSP/HTTP_REPLY_LIST von der Einrichtung PUSH INBOX an das Telekommunikationsendgerät DEVICE über den Proxy oder das Gateway Web/WAP PROXY/GATEWAY übermittelt. Die Informationen über die vorliegenden WAP-Push-Nachrichten können verschieden ausgestaltet sein. Sie dienen dem Telekommunikationsendgerät DEVICE als Grundlage für die Entscheidung, welche der den WAP-Push-Nachrichten zugrundeliegenden Datensätze angefordert werden.

Nach der Auswahl einer oder mehrerer WAP-Push-Nachrichten durch das Telekommunikationsendgerät DEVICE erfolgt die Versendung der Nachricht WSP/HTTP_GET_p1 mit Bezugnahmen auf die Informationen über die von dem Telekommunikationsendgerät ausgewählten WAP-Push-Nachrichten zur Anforderung dieser WAP-Push-Nachrichten. Die Nachricht wird von dem Proxy oder Gateway Web/WAP PROXY/GATEWAY als Nachricht HTTP_GET_p1 an die Einrichtung PUSH INBOX weitergeleitet. Bei der Größe p1 kann es sich hierbei um die URL des ersten Eintrags der Einrichtung PUSH INBOX handeln, wobei der erste Eintrag der ausgewählten WAP-Push-Nachricht entspricht.

Daraufhin werden die der oder den WAP-Push-Nachrichten zugrundeliegenden Datensätze unter Verwendung der Nachrichten HTTP_REPLY_DATA und WSP/HTTP_REPLY_DATA von der Einrichtung PUSH INBOX über den Proxy oder das Gateway Web/WAP PROXY/GATEWAY an das Telekommunikationsendgerät DEVICE übermittelt.

Eine Übersetzung des Inhaltes der Daten zur Anpassung an die Ausstattung des Telekommunikationsendgerätes kann bei der Übermittlung der Daten an das Telekommunikationsendgerät DEVICE bei Bedarf durch die Einrichtung PUSH INBOX oder den Proxy oder das Gateway Web/WAP PROXY/GATEWAY oder auch durch beliebige andere Knoten erfolgen.

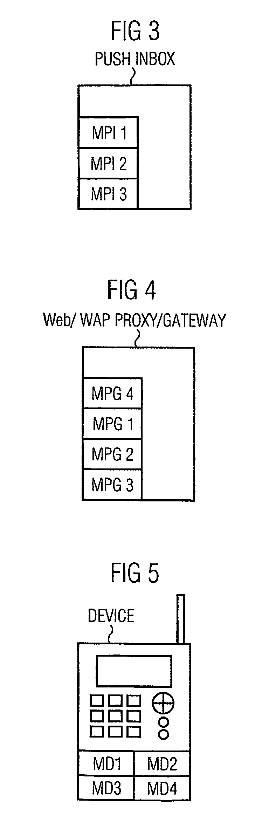

Figur 3 zeigt eine erfindungsgemäße Einrichtung PUSH INBOX mit einem Speicher MPI1 zum Speichern von WAP-Push-Nachrichten für Telekommunikationsendgeräte. Weiterhin umfasst die erfindungsgemäße Einrichtung PUSH INBOX Mittel MPI2 zum Übertragen von Informationen über WAP-Push-Nachrichten an Telekommunikationsendgeräte auf deren diesbezügliche Anfrage hin und Mittel MPI3 zum Übertragen von WAP-Push-Nachrichten an Telekommunikationsendgeräte auf deren diesbezügliche Anfrage hin. Die Einrichtung PUSH INBOX ist vorteilhafterweise Bestandteil des Datennetzes, sie kann realisiert sein durch einen Server oder dynamisch generiert werden. Wird das erfindungsgemäße Verfahren auf mehrere Telekommunikationsendgeräte angewandt, so ist es günstig, dass für jedes der Endgeräte eine erfindungsgemäße Einrichtung PUSH INBOX existiert.

Figur 4 zeigt einen erfindungsgemäßen Proxy oder Gateway Web/WAP PROXY/GATEWAY mit Mitteln MPG1 zum Empfangen und Auswerten von Anforderungs-Nachrichten von Telekommunikationsendgeräten. Weiterhin kann der Proxy oder das Gateway Web/WAP PROXY/GATEWAY aufgrund der Mittel MPG2 überprüfen, ob in einem Datennetz WAP-Push-Nachrichten für Telekommunikationsendgeräte vorliegen. Die Mittel MPG3 dienen der Versendung von Antworten auf die Anforderungs-Nachrichten der Telekommunikationsendgeräte, welche diese zur Versendung einer Anforderungsnachricht nach Informationen über WAP-Push-Nachrichten auffordern. Mit den Mitteln MPG4 kann der Proxy oder das Gateway Web/WAP PROXY/GATEWAY Informationen über für Telekommunikationsendgeräte vorliegende WAP-Push-Nachrichten versenden, falls das Ergebnis der Überprüfung mit den Mitteln MPG2 positiv ausfällt.

Figur 5 stellt ein erfindungsgemäßes Telekommunikationsendgerät DEVICE mit Mitteln MD1 zum Versenden von Anforderungs-Nachrichten. Diese Nachrichten können zur Anforderung von Informationen über WAP-Push-Nachrichten oder von Inhalten unabhängig von WAP-Push-Nachrichten dienen. Zusätzlich umfasst das Telekommunikationsendgerät DEVICE Mittel MD2 zum Empfangen und Auswerten von Informationen über in einem Datennetz vorliegende WAP-Push-Nachrichten und Mittel MD3 zum Anfordern von mindestens einem der den WAP-Push-Nachrichten zugrundeliegenden Datensätze unter Bezugnahme auf die zuvor übermittelten Informationen. Weiterhin sind Mittel MD4 zum Empfangen des angeforderten Datensatzes oder der angeforderten Datensätze vorhanden. Besonders vorteilhaft ist es, wenn das erfindungsgemäße Telekommunikationsendgerät DEVICE keine Mittel aufweist, welche es ihm erlauben, WAP-Push-Nachrichten ohne vorhergehende Anforderung durch das Telekommunikationsendgerät DEVICE, d.h. nach einem bisherigen WAP-Push-Standard zu empfangen bzw. zu verarbeiten.

## Patentansprüche

1. Verfahren zur Übertragung von Daten aus einem Datennetz an ein Telekommunikationsendgerät (DEVICE),
wobei die Daten in dem Datennetz als mindestens eine WAP-Push-Nachricht vorliegen,
**dadurch gekennzeichnet,**
**dass** dem Telekommunikationsendgerät (DEVICE) auf eine erste Anforderungsnachricht (WSP/HTTP_GET_p) des Telekommunikationsendgerätes (DEVICE) hin von dem Datennetz Informationen (WSP/HTTP_REPLY_LIST) über die mindestens eine WAP-Push-Nachricht übermittelt werden, und
**dass** das Telekommunikationsendgerät (DEVICE) die Daten unter Bezugnahme auf die zuvor übermittelten Informationen (WSP/HTTP_REPLY_LIST) über die mindestens eine WAP-Push-Nachricht anfordert.

2. Verfahren nach Anspruch 1, **dadurch gekennzeichnet,**
**dass** die Daten im Anschluss von dem Datennetz an das Telekommunikationsendgerät (DEVICE) übermittelt werden.

3. Verfahren nach Anspruch 1 oder 2, **dadurch gekennzeichnet,**
**dass** es sich bei der ersten Anforderungsnachricht (WSP/HTTP_GET_p) des Telekommunikationsendgerätes (DEVICE) um eine Anforderung nach Informationen über für das Telekommunikationsendgerät (DEVICE) bestimmte WAP-Push-Nachrichten handelt.

4. Verfahren nach Anspruch 3, **dadurch gekennzeichnet,**
**dass** dem Telekommunikationsendgerät (DEVICE) vor dem Versenden der ersten Anforderungsnachricht (WSP/HTTP GET_p) auf eine zweite Anforderungsnachricht (WSP/HTTP_GET_x) des Telekommunikationsendgerätes (DEVICE) nach nicht-WAP-Push-Inhalten aus dem Datennetz hin eine Aufforderung (WSP/HTTP_REDIRECT) zur Versendung der ersten Anforderungsnachricht (WSP/HTTP_GET_p) übermittelt wird.

5. Verfahren nach Anspruch 1 oder 2, **dadurch gekennzeichnet,**
**dass** es sich bei der ersten Anforderungsnachricht des Telekommunikationsendgerätes (DEVICE) um eine Anforderung (WSP/HTTP_GET_x) nach nicht-WAP-Push-Inha7.ten handelt.

6. Verfahren nach einem der Ansprüche 1 bis 5, **dadurch gekennzeichnet,**
**dass** dem Telekommunikationsendgerät (DEVICE) zusammen mit den Informationen (WSP/HTTP_REPLY_LIST) über die mindestens eine WAP-Push-Nachricht zusätzlich Informationen über weitere WAP-Push-Nachrichten übermittelt werden.

7. Verfahren nach einem der Ansprüche 1 bis 6, **dadurch gekennzeichnet,**
**dass** es sich bei den Informationen (NSP/HTTP_REPLY_LIST) über die mindestens eine WAP-Push-Nachricht um Informationen
- betreffend das Vorliegen der mindestens einen WAP-Push-Nachricht und/oder
- betreffend den Typ der mindestens einen WAP-Push-Nachricht und/oder
- betreffend Prioritätsangaben der mindestens einen WAP-Push-Nachricht und/oder
- betreffend mindestens einen Empfangszeitpunkt der mindestens einen WAP-Push-Nachricht im Datennetz und/oder
- betreffend mindestens einen Zeitpunkt zur Löschung der mindestens einen WAP-Push-Nachricht
handelt.

8. Einrichtung (PUSH INBOX) zur Durchführung des Verfahrens zur Übertragung von Daten aus einem Daten netz an Telekommunikationsendgerät (DEVICE) nach Anspruch 1-7
- Mitteln (MPI1) zum Speichern von mindestens einem Datensatz, welcher im Datennetz in Form einer WAP-Push-Nachricht für das Telekommunikationsendgerät (DEVICE) vorliegt,
- Mitteln (MPI2) zum Übertragen von Informationen (HTTP_REPLY_LIST) über die mindestens eine WAP-Push-Nachricht an das Telekommunikationsendgerät (DEVICE) auf eine diesbezügliche erste Anforderungsnachricht (WSP/HTTP_GET_p) des Telekommunikationsendgerätes (DEVICE) hin, und
- Mitteln (MPI3) zum Übertragen des mindestens einen Datensatzes an das Telekommunikationsendgerät (DEVICE) auf eine diesbezügliche zweite Anforderungsnachricht (WSP/HTTP_GET_p1) des Telekommunikationsendgerätes (DEVICE) hin.

9. Einrichtung (Web/WAP PROXY/GATEWAY) zur Durchführung des Verfahrens Übertragung von Daten aus einem Datennetz an ein Telekommunikationsendgerät (DEVICE) nach Anspruch 1-7, mit
- Mitteln (MPG1) zum Empfangen und Auswerten einer ersten Anforderungs-Nachricht (WSP/HTTP_GET_x, WSP/HTTP_GET_p) des Telekommunikationsendgerätes (DEVICE),
- Mitteln (MPG2) zum Überprüfen des Vorliegens von mindestens einer WAP-Push-Nachricht für das Telekommunikationsendgerät (DEVICE) in dem Datennetz, und
- Mitteln (MPG4) zum Versenden von Informationen (WSP/HTTP_REPLY_LIST) über mindestens eine für das Telekommunikationsendgerät (DEVICE) in dem Datennetz vorliegende WAP-Push-Nachricht an das Telekommunikationsendgerät (DEVICE) bei einem positiven Ergebnis der vorhergehenden Überprüfung.

10. Einrichtung (Web/WAP PROXY/GATEWAY) nach Anspruch 9 mit Mitteln (MPG3) zum Versenden einer Antwort (WSP/HTTP_REDIRECT) an das Telekommunikationsendgerät (DEVICE), welche das Telekommunikationsendgerät (DEVICE) zur Versendung einer zweiten Anforderungsnachricht (NSP/HTTP_GET_p) nach Informationen über WAP-Push-Nachrichten auffordert, auf die erste Anforderungsnachricht (WSP/HTTP_GET_x) des Telekommunikationsendgerätes (DEVICE) hin.

11. Telekommunikationsendgerät (DEVICE) Zur Durchführung des Verfahrens zu Übertragung von Daten aus einem Daten netz an das Telekommunitionsendgerät (DEVICE) mit
- Mitteln (MD1) zum Versenden einer Nachricht (WSP/HTTP_GET_x, WSP/HTTP_GET_p) zur Anforderung von Informationen über WAP-Push-Nachrichten und/oder von nicht-WAP-Push-Inhalten aus einem Datennetz,
- Mitteln (MD2) zum Empfangen und Auswerten von Informationen (WSP/HTTP_REPLY_LIST) über einen oder mehrere Datensätze, welcher oder welche in dem Datennetz in Form von einer oder mehreren WAP-Push-Nachrichten vorliegen,
- Mitteln (MD3) zum Anfordern (WSP/HTTP_GET_p1) von mindestens einem Datensatz unter Bezugnahme auf die zuvor übermittelten Informationen (WSP/HTTP_REPLY_LIST), und
- Mitteln (MD4) zum Empfangen des angeforderten Datensatzes (WSP/HTTP_REPLY_DATA) oder der angeforderten Datensätze.

12. Telekommunikationsendgerät (DEVICE) nach Anspruch 11,
**dadurch gekennzeichnet,**
**dass** es sich bei dem Telekommunikationsendgerät (DEVICE) um ein nicht-WAP-Push-kompatibles oder um ein eingeschränkt WAP-Push-kompatibles Telekommunikationsendgerät (DEVICE) handelt.

## Claims

1. Method for transmission of data from a data network to a telecommunication terminal (DEVICE),
with the data being present in the data network as at least one WAP push message,
**characterized in that**,
information (WSP/HTTP_REPLY_LIST) about the at least one WAP push message is transferred to the telecommunication terminal (DEVICE) in response to a first request message (WSP/HTTP_GET_p), and
the telecommunication terminal (DEVICE) requests the data taking into account the previously transferred information (WSP/HTTP_REPLY_LIST) about the at least one WAP push message.

2. Method according to claim 1, **characterized in that**,
the data is subsequently transferred from the data network to the telecommunication terminal (DEVICE).

3. Method according to claim 1 or 2, **characterized in that**
the first request message (WSP/HTTP_GET_p) of the telecommunication terminal (DEVICE) involves a request for information about the WAP push message intended for the telecommunication terminal (DEVICE).

4. Method according to claim 3, **characterized in that** the telecommunication terminal (DEVICE) transfers a request (WSP/HTTP_REDIRECT) for sending the first request message (WSP/HTTP_GET_p) before sending the first request message (WSP/HTTP_GET_p) in response to a second request message (WSP/HTTP_GET_x) of the telecommunication terminal (DEVICE) for non-WAP push content from the data network.

5. Method according to claim 1 or 2, **characterized in that**
the first request message of the telecommunication terminal (DEVICE) is a request (WSP/HTTP_GET_x) for non-WAP push content.

6. Method according to one of the claims 1 to 5,
**characterized in that**
together with the information (WSP/HTTP_REPLY_LIST) about the at least one WAP push message, information about further WAP push messages is additionally transferred to the telecommunication terminal (DEVICE).

7. Method according to one of the claims 1 to 6,
**characterized in that**
the information (WSP/HTTP_REPLY_LIST) about the at least one WAP push message involves information
- relating to the presence of at least one WAP push message and/or
- relating to the type of the at least one WAP push message and/or
- relating to priority specifications of the at least one WAP push message and/or
- relating to at least one receive time of the at least one WAP push message in the data network and/or
- relating to at least one point in time for deleting the at least one WAP push message,.

8. Device (PUSH INBOX) for executing the method for transmission of data from a telecommunication terminal (DEVICE) 1 according to claim 1-7, with
- Means (MPI1) for storing at least one data record which is present in the data network in the form of a WAP push message for the telecommunication terminal (DEVICE),
- Means (MPI2) for transmission of information (HTTP_REPLY_LIST) about the at least one WAP push message to the telecommunication terminal (DEVICE) in response to a first request message (WSP/HTTP_GET_p) of the telecommunication terminal (DEVICE) relevant thereto, and
- Means (MPI3) for transmission of the at least one data record to the telecommunication terminal (DEVICE) in response to a second request message (WSP/HTTP_GET_p1) of the telecommunication terminal (DEVICE) relevant thereto.

9. Device (Web/WAP PROXY/GATEWAY) for executing the method for transmission of data from a data network to a communication terminal (DEVICE) according to claim 1-7, with
- Means (MPG1) for receiving and evaluating a first request message (WSP/HTTP_GET_x, WSP/HTTP_GET p) of the telecommunication terminal (DEVICE),
- Means (MPG2) for checking for the presence of at least one WAP push message for the telecommunication terminal (DEVICE) in the data network, and
- Means (MPG4) for sending information (WSP/HTTP_REPLY_LIST) about at least one WAP push message present for the telecommunication terminal (DEVICE) in the data network to the telecommunication terminal (DEVICE) if the result of the previous check is positive.

10. Device (Web/WAP PROXY/GATEWAY) according to claim 9 with means (MPG3) for sending a response (WSP/HTTP_REDIRECT) to the telecommunication terminal (DEVICE), which requests the telecommunication terminal (DEVICE) to send a second request message (WSP/HTTP_GET_p) for information about WAP push messages in response to the first request message (WSP/HTTP_GET_x) of the telecommunication terminal (DEVICE).

11. Telecommunication terminal (DEVICE) for executing the method for transmission of data from a data network to a communication terminal (DEVICE), with
- Means (MD1) for sending a message (WSP/HTTP_GET_x, WSP/HTTP_GET_p) for requesting information about WAP push messages and/or non-WAP push content from a data network,
- Means (MD2) for receiving and evaluating information (WSP/HTTP_REPLY_LIST) about one or more data records which is or are present in the data network in the form of one or more WAP push messages,
- Means (MD3) for requesting (WSP/HTTP_GET_p1) at least one data record taking into account the previously transferred information (WSP/HTTP_REPLY LIST), and
- Means (MD4) for receiving the requested data record WSP/HTTP_REPLY_DATA) or the requested data records.

12. Telecommunication terminal (DEVICE) according to claim 11, **characterized in that**
the telecommunication terminal (DEVICE) is a non-WAP push-compatible or a restricted WAP push-compatible telecommunication terminal (DEVICE).

## Revendications

1. Procédé de transmission de données d'un réseau de données vers un terminal de télécommunication (DEVICE),
- les données, dans le réseau de données, se présentent sous la forme d'au moins un message WAP push,
**caractérisé en ce que** des informations (WSP/HTTP_REPLY_LIST) sur l'au moins un message WAP push sont transmises du réseau de données au terminal de télécommunication (DEVICE) suite à un premier message de requête (WSP/HTTP_GET_p) du terminal de télécommunication (DEVICE) et
le terminal de télécommunication (DEVICE) demande les données en se référant aux informations (WSP/HTTP_REPLY_LIST) sur l'au moins un message WAP push transmises préalablement.

2. Procédé selon la revendication 1, **caractérisé en ce que** les données sont ensuite transmises du réseau de données au terminal de télécommunication (DEVICE).

3. Procédé selon la revendication 1 ou 2, **caractérisé en ce que** le premier message de requête (WSP/HTTP_GET_p) du terminal de télécommunication (DEVICE) est une requête d'informations sur des messages WAP push déterminés pour le terminal de télécommunication (DEVICE).

4. Procédé selon la revendication 3, **caractérisé en ce que**, avant l'émission du premier message de requête (WSP/HTTP_GET_p), suite à un deuxième message (WSP/HTTP_GET_x) du terminal de télécommunication (DEVICE) demandant des contenus de type non WAP push du réseau de données, une invitation (WSP/HTTP_REDIRECT) à émettre le premier message de requête (WSP/HTTP_GET_p) est transmise au terminal de télécommunication (DEVICE).

5. Procédé selon la revendication 1 ou 2, **caractérisé en ce que** le premier message de requête du terminal de télécommunication (DEVICE) est une requête (WSP/HTTP_GET_x) de contenus de type non WAP push.

6. Procédé selon l'une des revendications 1 à 5, **caractérisé en ce que** sont additionnellement transmises au terminal de télécommunication (DEVICE), conjointement avec les informations (WSP/HTTP_REPLY_LIST) sur l'au moins un message WAP push, des informations sur d'autres messages WAP push.

7. Procédé selon l'une des revendications 1 à 6, **caractérisé en ce que** les informations (WSP/HTTP_REPLY_LIST) sur l'au moins un message WAP push sont des informations
- concernant la présence de l'au moins un message WAP push et/ou
- concernant le type de l'au moins un message WAP push et/ou
- concernant des indications de priorité de l'au moins un message WAP push et/ou
- concernant au moins un instant de réception de l'au moins un message WAP push dans le réseau de données et/ou
- concernant au moins un instant d'effacement de l'au moins un message WAP push.

8. Dispositif (PUSH INBOX) permettant l'exécution du procédé de transmission de données d'un réseau de données vers un terminal de télécommunication (DEVICE) selon la revendication 1 à 7, comprenant
- des moyens (MPI1) pour stocker au moins un jeu de données présent dans le réseau de données sous la forme d'un message WAP push pour le terminal de télécommunication (DEVICE),
- des moyens (MPI2) pour transmettre des informations (HTTP_REPLY_LIST) sur l'au moins un message WAP push au terminal de télécommunication (Device) suite à un premier message de requête (WSP/HTTP_GET_p) y relatif du terminal de télécommunication (DEVICE) et
- des moyens (MPI3) pour transmettre l'au moins un jeu de données au terminal de télécommunication (DEVICE) suite à un deuxième message de requête (WSP/HTTP_GET_p1) y relatif du terminal de télécommunication (DEVICE).

9. Dispositif (Web/WAP PROXY/GATEWAY) permettant l'exécution du procédé de transmission de données d'un réseau de données vers un terminal de télécommunication (DEVICE) selon la revendication 1 à 7, comprenant
- des moyens (MPG1) pour recevoir et évaluer un premier message de requête (WSP/HTTP_GET_x, WSP/HTTP_GET_p) du terminal de télécommunication (DEVICE),
- des moyens (MPG2) de vérification de la présence d'au moins un message WAP push pour le terminal de télécommunication (DEVICE) dans le réseau de données et
- des moyens (MPG4) pour envoyer au terminal de télécommunication (DEVICE), en cas de résultat positif de la vérification préalable, des informations (WSP/HTTP_REPLY_LIST) sur au moins un message WAP push présent dans le réseau de données pour le terminal de télécommunication (DEVICE).

10. Dispositif (Web/WAP PROXY/GATEWAY) selon la revendication 9, comprenant des moyens (MPG3) pour envoyer au terminal de télécommunication (DEVICE) une réponse (WSP/HTTP_REDIRECT) qui invite le terminal de télécommunication (DEVICE) à envoyer un deuxième message de requête (WSP/HTTP_GET_p) d'informations sur des messages WAP push, suite au premier message de requête (WSP/HTTP_GET_x) du terminal de télécommunication (DEVICE).

11. Terminal de télécommunication (DEVICE) permettant d'exécuter le procédé de transmission de données d'un réseau de données vers le terminal de télécommunication (DEVICE), comprenant
- des moyens (MD1) pour émettre un message (WSP/HTTP_GET_x, WSP/HTTP_GET_p) de requête d'informations sur des messages WAP push et/ou de contenus de type non WAP push d'un réseau de données,
- des moyens (MD2) pour recevoir et évaluer des informations (WSP/HTTP_REPLY_LIST) sur un ou plusieurs jeux de données présent(s) dans le réseau de données sous la forme d'un ou de plusieurs messages WAP push,
- des moyens (MD3) pour demander (WSP/HTTP_GET_p1) au moins un jeu de données avec référence aux informations préalablement transmises (WSP/HTTP_REPLY_LIST) et
- des moyens (MD4) pour recevoir le jeu de données demandé (WSP/HTTP_REPLY_DATA) ou les jeux de données demandés.

12. Terminal de télécommunication (DEVICE) selon la revendication 11, **caractérisé en ce que** le terminal de télécommunication (DEVICE) est un terminal de télécommunication non compatible avec le WAP push ou compatible avec le WAP push dans une mesure limitée.
